# NEUE EUROPÄISCHE PATENTSCHRIFT

(11) **EP 1 932 424 B2**
(45) Veröffentlichungstag und Bekanntmachung des Hinweises auf die Entscheidung über den Einspruch: **05.07.2017**
(45) Hinweis auf die Patenterteilung: 27.11.2013
(21) Anmeldenummer: 07023624.5
(22) Anmeldetag: 06.12.2007
(51) Int. Cl.: A01M 7/00

(54) **Spritzeinrichtung**
Spraying device
Dispositif de pulvérisation

(30) Priorität: 15.12.2006 DE 102006059194
(43) Veröffentlichungstag der Anmeldung: 18.06.2008
(73) Patentinhaber: Amazonen-Werke H. Dreyer GmbH & Co. KG, 49205 Hasbergen (DE)
(72) Erfinder: Herberg, Friedrich, Dr. Ing., 40789 Monheim-Bamberg (DE); Kolvenbach, Heiner, Dr. Ing., 52072 Aachen (DE); Scheufler, Bernd, Dr. Ing., 49205 Hasbergen (DE); Ehlen, Volker, Dipl.-Ing., 49205 Hasbergen (DE)

(56) Entgegenhaltungen:
- EP-A- 1 378 293
- WO-A-97/16964
- GB-A- 2 048 091
- US-A- 4 121 767
- US-A- 5 911 362
- US-A- 5 931 882
- SÖKEFELD M. ET AL: 'Entwicklung einer Versuchseinrichtung zur Untersuchung der Verzögerungszeiten von Direkteinspeisungssystemen für die teilflächenspezifische Applikation von Herbiziden' AGRARTECHNISCHE FORSCHUNG Bd. 11, Nr. 5, 2005, Seiten 145 - 154
- SÖKEFELD M. ET AL: 'Möglichkeiten und Grenzen der Direkteinspeisung von Herbiziden zur teilschlagspezifischen Unkrautkontrolle' ZEITSCHRIFT FÜR PFLANZENKRANKEITEN UND PFLANZENSCHUTZ Bd. XIX, 2004, Seiten 431 - 437
- "Concept of a direct injection system for field sprayers in combination with On-line weed detection", CIGR International Conference 2004, Beijing, Hloben P. et al
- STEWARD B.L. ET AL: 'Modeling the raven SCS-700 chemical injection system with carrier control with sprayer simulation' DIGITAL REPOSITORY@IOWA STATE UNIVERSITY Bd. 43, Nr. 2, 2000, Seiten 231 - 245

## Beschreibung

Die Erfindung betrifft eine Spritzeinrichtung gemäß des Oberbegriffes des Patentanspruches 1.

Eine derartige Spritzeinrichtung ist in der WO 97/16964 beschrieben. Bei dieser Spritzeinrichtung wird sämtlichen Düsen die gleiche Menge Wirkstoffmittel zugeführt. Eine teilflächenspezifische Variation der Wirkstoffmittelmenge ist hier nicht möglich.

Eine weitere Spritzeinrichtung ist beispielsweise durch die DE 103 12 930 A1 bekannt. Bei derartigen Spritzeinrichtungen wird der Wirkstoff erst während des Spritzvorganges der Trägerflüssigkeit zudosiert. Bei einem derartigen Zudosieren des Wirkstoffes zur Trägerflüssigkeit spricht man von einer sog. Direkteinspeisung.

Bei konventionellen Feldspritzen wird die Spritzbrühe auf dem Hof angemischt und in großen Mengen über teilweise weite Strecken über öffentliche Verkehrswege zum Feld gebracht. Die Anmischung und der Transport bergen große Risiken für den Anwender und die Umwelt. Zudem besteht das Risiko, bei unplanmäßigem Verlauf der Applikation große Mengen Spritzbrühe zuviel angemischt zu haben, die entweder entsorgt oder gelagert werden müssen. Die einzigen Möglichkeiten auf wechselnde Applikationsbedingungen zu reagieren, sind die Änderungen der Ausbringmenge über die gesamte Arbeitsbreite und die vollständige Abschaltung von Teilbreiten oder einzelnen Düsen.

Für die Direkteinspeisung von Pflanzenschutzmitteln während der Applikation werden u.a. folgende Argumente genannt:
Der Transport von Pflanzenschutzmitteln (PSM) -Konzentrat und Trägerflüssigkeit auf der Spritze erfolgen in getrennten Behältern. Die Behälter für PSM-Konzentrat sind relativ klein und können unfallsicher konstruiert untergebracht werden. Wenn Wasser als Trägerflüssigkeit verwendet wird, ist dies auch bei größeren Verlustmengen ökologisch vollkommen unbedenklich.

Sowohl nach geplanter Beendigung als auch bei überraschendem Abbruch der Pflanzenschutzmaßnahme fallen keine Restmengen an Spritzbrühe an. Des Weiteren können die Volumenströme von PSM-Konzentrat und Trägerflüssigkeit entkoppelt und somit unabhängig voneinander dosiert werden. Dies bringt wesentliche Anwendungsvorteile.

Sowohl bei konventionellen Spritzen mit angemischter Spritzbrühe als auch wie auch bei Feldspritzen mit Direkteinspeisung von Pflanzenschutzmitteln in die Trägerflüssigkeit wird dem beim Ausbringen der Spritzbrühe wie auch bei der Direkteinspeisung des PSM-Konzentrats in die Trägerflüssigkeit die Anpassung der Ausbringmengen in Höhe der erforderlichen auszubringende Menge und an die Fahrgeschwindigkeit über den Spritzdruck geregelt.

Bei der Direkteinspeisung ist die Menge des in die Trägerflüssigkeit eingespeisten PSM-Konzentrates proportional zur ausgebrachten Trägerflüssigkeitsmenge. Die in die Trägerflüssigkeit eingespeiste PSM-Konzentratmenge steht in einem festen Verhältnis zur Menge der Trägerflüssigkeit.

Sowohl die bei konventionellen Spritzen vorab angemischte Spritzbrühe die zu beim Direkteinspeisesystem während des laufenden Spritzbetriebes durch Direkteinspeisung des PSM-Konzentrates in die Trägerflüssigkeit in einer Mischkammer im Leitungssystem miteinander zu einer Spritzbrühe vermischten Komponenten werden über Spritzdüsen ausgebracht. Diese Spritzdüsen zerstäuben die Spritzbrühe und erzeugen hierdurch Flüssigkeitströpfchen. Diese Flüssigkeitströpfchen müssen in einem vorgegebenen Größenspektrumsbereich liegen, um so sicher zu stellen, dass sich die Spritzbrühetröpfchen an den Pflanzen anlagern können und andererseits nicht durch Windabdrift verwehen. Hierdurch ist ein relativ schmaler Druckbereich für die jeweils eingesetzte Spritzdüse vorgegeben. Nur innerhalb dieses schmalen Druckbereiches kann die Ausbringmenge ohne nachteilige Veränderung des Tropfengrößenspektrums verändert werden. Hierdurch sind der Ausbringmengenvariation enge Grenzen gesetzt.

Der Erfindung liegt die Aufgabe zugrunde, eine Spritzeinrichtung zu schaffen, bei der sich eine vom Volumenstrom des Wirkstoffmittels unabhängiger Druck an den Düsen einstellt, so dass die Arbeit unabhängig vom Wirkstoffmittel-Volumenstrom immer mit dem optimalen Tropfengrößenspektrum auch mit teilflächenspezifischer Variation der Ausbringmenge in Abschnitten stattfinden kann.

Diese Aufgabe wird erfindungsgemäß durch die Kennzeichnenden Merkmale des Anspruches 1 gelöst.

Infolge dieser Maßnahme wird erreicht, dass den Düsen immer der richtige Druck zur optimalen Ausbildung von Tropfengröße und Spritzkegel auch in kleinen Abschnitten der Arbeitsbreite zur Verfügung gestellt wird. Auch beim Abschalten einzelner Teilbreiten oder Düsen bleibt der Druck für die noch im Eingriff befindlichen Düsen immer optimal. Gleichzeitig wird das Wirkstoffmittel in der richtigen Menge in die Trägerflüssigkeit eingespeist. Damit sich auch bei ändernden Ausbringmengen der Düse das Tropfenspektrum des Spritzkegels nicht ändert, ist vorgesehen, dass auch bei Änderung der ausgebrachten Menge des Wirkstoffmittels der Spritzdruck zumindest annähernd konstant bleibt. So lässt sich auch eine teilflächenspezifische Variation der Ausbringmenge zumindest in Abschnitten erreichen.

Damit auch bei größeren Änderungen der Konzentration des Pflanzenschutzwirkstoffmittels beim Einspeisen in die Trägerflüssigkeit ein optimales Tropfengrößenspektrum erhalten bleibt, ist vorgesehen, dass bei Erhöhung der ausgebrachten Wirkstoffmittelmenge die Trägerflüssigkeitsmenge reduziert wird, und dass bei Verringerung der ausgebrachten Wirkstoffmittelmenge die Trägerflüssigkeitsmenge erhöht wird.

Um in jeweils gewünschter Menge das Wirkstoffmittel in die Trägerflüssigkeitsleitung zuführen zu können, ist vorgesehen, dass der Wirkstoffleitung zumindest ein einstellbares Durchflussventil zugeordnet ist.

Um den Spritzdruck der Trägerflüssigkeit konstant zu halten und erforderlichenfalls entsprechend nachregeln, sowie die jeweils gewünschte Wirkstoffmenge der Trägerflüssigkeit zuführen zu können, ist vorgesehen, dass der Trägerflüssigkeitsleitung und der Wirkstoffleitung jeweils zumindest ein einstellbares Durchflussventil zugeordnet sind ist.

Zur Abstimmung der Ausbringmenge und des Druckes der Trägerflüssigkeit sowie der Wirkstoffmittelmenge an die jeweiligen Einsatzverhältnisse ist vorgesehen, dass das der Trägerflüssigkeitsleitung zugeordnete Durchflussventil bei Änderung der Wirkstoffmittelmenge gleichzeitig, jedoch entgegengesetzt zu dem Durchflussventil der Wirkstoffmittelleitung mit dem der Wirkstoffleitung zugeordneten Durchflussventil verstellt wird.

Weitere Einzelheiten der Erfindung sind der Beispielsbeschreibung und den Zeichnungen zu entnehmen. Hierbei zeigen
- Fig. 1: den Flüssigkeitsleitungsplan eines landwirtschaftlichen Spritzgerätes in schematischer Darstellung und
- Fig. 2: einen weiteren Flüssigkeitsleitungsplan eines landwirtschaftlichen Spritzgerätes in schematischer Darstellung.

Das als Feldspritze ausgebildete landwirtschaftliche Spritzgerät zum Ausbringen von Spritzmitteln weist einen Vorratstank 1 auf, in dem sich die Trägerflüssigkeit, vornehmlich Wasser befindet. Von dem Vorratstank 1 führt eine Saugleitung 2 zu einer von einer Kraftquelle angetriebenen Pumpe 3. Die Ausgangsleitung 4 der Pumpe 3 führt zu der als Spritzdruckregler 5 ausgebildeten Dosierarmatur. Von dem Spritzdruckregler 5 führt eine Rücklaufleitung 6 in den Vorratstank 1 zurück. Über die Dosierarmatur wird die Fördermenge, die über die Spritzdüsen 7 des Spritzgestänges ausgebracht wird, eingestellt. Der überschüssige Trägerflüssigkeitsvolumenstrom wird über die Rücklaufleitung 6 in Vorratstank 1 zurück geleitet. Die Dosierarmatur 5, welches beispielsweise als 3-Wegeventil ausgebildet ist, ist im geschlossenen Druckregelkreis angeordnet, um in allen Betriebssituationen den optimalen Arbeitspunkt der Düsen 7 im Hinblick auf Spritzkegel und Tropfengröße zu gewährleisten.

Die von der Dosierarmatur 5 kommende Trägerflüssigkeitsleitung 8 verzweigt sich an der Stelle 9, die sich in der Nähe des Spritzgestänges befindet in einzelne Teilbreitenleitungen 10, die jeweils zu einer Teilbreite des Spritzgestänges und der dort angeordneten Spritzdüsen 7 führt. Hinter der Verzweigung 9 der Hauptträgerflüssigkeitsdruckleitung 8 ist in jeder Teilbreitenleitung 10 ein Teilbreitenventil 11 angeordnet. Hinter dem Teilbreitenventil 11 ist in jeder Teilbreite eine Mischkammer 12 im Bereich des Spritzgestänges angeordnet. Von dieser Mischkammer 12 aus führt jede Teilbreitenleitung 10 zu den einzelnen an dem Spritzgestänge angeordneten Spritzdüsen. Diesen Spritzdüsen 7 kann ein Düsenventil 13 zugeordnet sein, über welche die Flüssigkeitszufuhr zu jeder Spritzdüse 7 separat absperrbar ist.

Jedem auszubringendem Wirkstoffmittel 14 ist eine eigene Dosierpumpe 15, 16 zugeordnet, die jeweils von einem Motor 17 angetrieben wird. Die Wirkstoffmittelpumpen 15, 16 sind als einstellbare Pumpen ausgebildet und können im Ausführungsbeispiel mittels eines manuellen Verstellmechanismus von Hand eingestellt werden. Von der von der Trägerflüssigkeitspumpe 3 kommenden Druckleitung 4 zweigt vor dem Dosierventil 5 an der Verzweigstelle 18 eine Bypassleitung 19 ab. Diese unter Druck stehende und mit Trägerflüssigkeit gefüllte Bypassleitung 19 führt zu dem als wasserhydraulischen Motor ausgebildeten Antriebsmotor 17 für den Antrieb der Wirkstoffmittelpumpen 15, 16. Somit ist ein volumenstrom-proportionaler Antrieb für den wasserhydraulischen Motor 17 in der Trägerflüssigkeit führenden Bypassleitung 19 eingebaut, dessen Abtrieb gleichzeitig die beiden Wirkstoffmittelpumpen 15, 16 mit manueller Verstellung antreibt. Es können aber auch mit gleichem Resultat Elektromotoren oder ölhydraulische Motoren verwendet werden, die von einem Trägerflüssigkeitsvolumenstromsensor geführt werden.

Über den Handverstellungsmechanismus der Wirkstoffmittelpumpen 15, 16 wird vor Arbeitsbeginn die Aufwandmenge des Wirkstoffmittels fest eingestellt. Die während der Anwendung veränderlichen Parameter, wie Fahrgeschwindigkeit und Teilbreiten- bzw. Einzeldüsenschaltung und - im Falle der teilfächendifferenzierten Bewirtschaftung - der örtliche Bedarf bewirken über die Steuerung 25 eine Verstellung der Proportionaleblende 24 und damit eine Anpassung des Volumenstroms der Wirkkstoffpumpen 15, 16.

In die unter Druck stehende Bypassleitung münden vor dem Antriebsmotor 17 die jeweils die von den Wirkstoffmittelpumpen 15, 16 kommende Wirkstoffmittelleitungen 20, 21 über eine Einschleusstelle 22 ein. An dieser Stelle 22 erfolgt die Vormischung bzw. Vorverdünnung der jeweiligen Wirkstoffmittel mit der sich in der Bypassleitung 19 befindenden und unter Druck stehenden Trägerflüssigkeit, hier Wasser. Durch die Durchleitung der Trägerflüssigkeit in der Bypassleitung 19 und der eingeschleusten Wirkstoffmitteln in den Leitungen 20 und 21 über die weiterführende Bypassleitung 19'durch den Antriebsmotor 17 werden diese in dem Antriebsmotor gut miteinander vermischt. Hinter dem Antriebsmotor 17 teilt sich die Bypassleitung 19' über ein Zweigleitungsstück 23 jeweils in die zu den in den Teilbreiten-Trägerflüssigkeitsleitungen 10 angeordneten Mischkammern 12 führenden Teilbypassleitungen 19" auf. In jeder Teilbreitenbypassleitung 19" ist ein einstellbares Ventil 24, im Ausführungsbeispiel eine einstellbare Proportionalblende angeordnet. In dem als Bypassleitung 19, 19', 19", ausgebildeten Nebenstrom wird das Wirkstoffmittel zunächst zu einer Vormischung aufbereitet und dann in einer Mischkammer 12 der Teilbreitenleitungen 10 mit der Trägerflüssigkeit zur endgültigen Spritzbrühe vermischt. Die Vormischung weist eine Wirkstoffmittelkonzentration auf, die an den Verstellpumpen 15, 16 einstellbar und proportional zu den Wirkstoffmittelaufwendungen sind. Die Verstellpumpen 15, 16 werden zur Erzeugung der Vormischung vor der Anwendung von Hand eingestellt, während die jeweilige Proportionalblende 24 die veränderlichen Parameter während der Anwendung verarbeitet, in dem sie den Volumenstrom der Vormischung zur jeweiligen Teilbreite anpassen.

Die Proportionalblenden 24 werden, wie dargestellt, über eine elektronische Steuerung 25 entsprechend angesteuert.

Bei dieser Anordnung wird auch die besondere Stärke des Konstantendrucksystems für die Trägerflüssigkeit deutlich: trotz der durch die Verstellblenden 24 wechselnden Vormischungsvolumenströme über die als Nebenschluss dienenden Bypassleitungen 19, 19'19" sorgt die Druckregelung durch die Dosierarmatur 5 für die Trägerflüssigkeit ohne weitere steuerungstechnische Eingriffe für eine Verringerung des Trägerflüssigkeitsvolumenstroms über die Hauptleitung8 , so dass sich schließlich die Teilströme zu dem für die Düsen 7 gewünschten optimalen Gesamtvolumenstrom addieren.

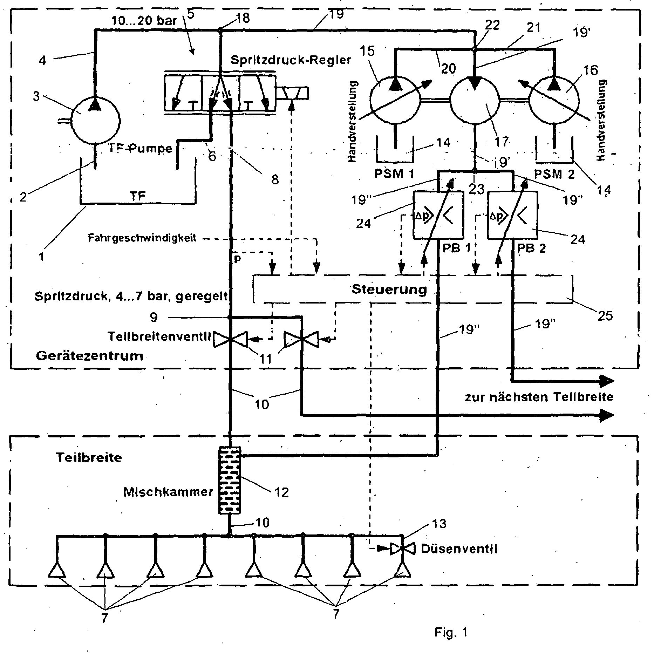

In der in Fig. 1 dargestellten Anordnung, bei der die Mischkammer 12 auf der Teilbreite sitzt und jeder Teilbreite eine eigene Proportionalblende 24 zugeordnet ist, lässt sich auch bereits eine gewisse Teilflächenspezifizierung bei der Ausbringung des Wirkstoffmittels erreichen, in dem die Ausbringmenge aller Wirkstoffmittel zusammen an jeder Teilbreite unabhängig verstellt werden können. Da die Konzentration in jeder Vormischungsleitung 19" allein durch die Einstellung der Verstellpumpen 15, 16 bestimmt ist, erzeugt nur die Schlauchführung in der Teilbreite hinter der Mischkammer 12 einen Zeitverzug: bei Verstellung der Proportionalblende 24 wird der zur Mischkammer 12 fließende und sich vermischende Vormischungsvolumenstrom unverzögert verändert. Für die Einstellung der exakten Dosierung ist die genaue Kenntnis der Volumenströme der Vormischung notwendig. Diese Messung kann über separate, hier nicht dargestellte Durchflusssensoren erfolgen. Eine wesentlich wirtschaftlichere und technisch einfachere Methode, wie in Fig. 1 dargestellt, ist die hier dargestellte Messung der Druckdifferenz, die züsammen mit dem Öffnungsquerschnitt der Blende 24 und deren Kalibrierkennfeldern sehr genaue Messergebnisse liefert. Hierzu sind entsprechende Kennfelder in dem Speicher der elektronischen Steuerungs- und Regeleinrichtung 25 hinterlegt.

Von der Steuerung 25 aus kann durch die Ansteuerung des jeweiligen Teilbreitenventils 11 jede Teilbereite entsprechend der jeweils erforderlichen Arbeitsbreite zu- oder abgeschaltet werden. Ebenfalls ist es, wie angedeutet, über die elektronische Steuerung 25 möglich, über die den einzelnen Düsen 7 zugeordneten Düsenventile 13 (von denen nur eins dargestellt ist) diese anzusteuern, so dass jede einzelne Düse 7 entsprechend abgesperrt oder zugeschaltet werden kann, so dass entsprechend der Spritzbreite einer Düse 7 die tatsächliche Ausbringbreite verändert werden kann.

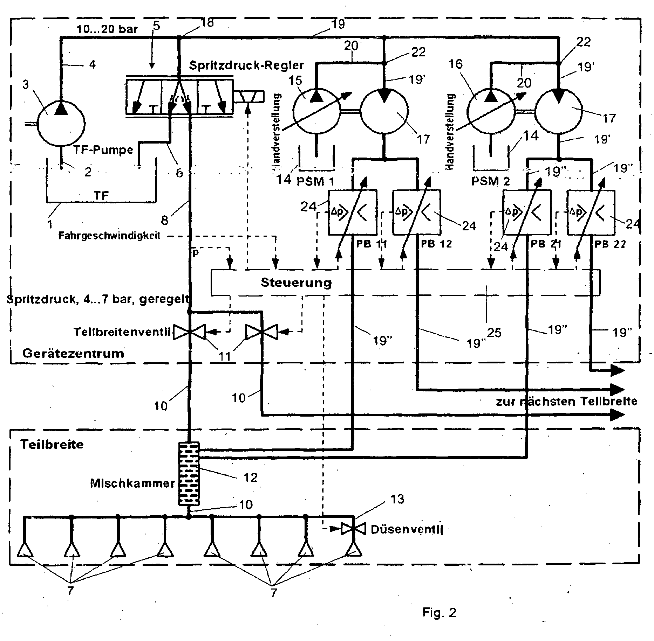

Die Darstellung gemäß Fig. 2 unterscheidet sich von dem Ausführungsbeispiel gemäß Fig. 1 im wesentlichen dadurch, dass jeder Wirkstoffmittelpumpe 15, 16 ein eigener Antriebsmotor 17 zugeordnet ist, sowie jede Wirkstoffmittelvorschmischungs-Bypassleitung 19' separate Einstellventile 24, im Ausführungsbeispiel einstellbar Proportionalblenden 24, die unabhängig voneinander ansteuerbar sind, zugeordnet ist. Hierdurch wird ein vollständiger Funktionsumfang zur teilflächenspezifischen Direkteinspeisung erreicht. Für jedes Wirkstoffmittel 14 wird also eine eigene Dosierverstellpumpe 15, 16 bereitgestellt, der für jede Teilbreite eine Verstellblende 24 nachgeschaltet ist.

Als Ergebnis entsteht ein System, dass jeder Teilbreite je eine Vormischung für jedes Wirkstoffmittel zuleitet, so dass an jeder Teilbreite jedes Wirkstoffmittel separat dosierbar ist. Da zudem durch die auf den Teilbreiten untergabrachten Mischkammern 12 sehr kleine Verzögerungen entstehen, ist mit diesem System die am weitesten gehende Form der teilflächenspezifischen Ausbringung möglich. Um zu gewährleisten, dass nach Möglichkeit nur geringe vorgemischte Wirkstoffmittelmengen bei Beendigung der Ausbringarbeit noch in den Leitungen 19', 19", 12 vorhanden sind, muss durch die Steuerung 25 sichergestellt werden, dass mit Kenntnis der Volumenströme und der Schlauchvolumina die Zudosierung der Wirkstoffmittel genau zu dem Zeitpunkt vor Ende der Anwendung gestoppt wird, dass die in den Schläuchen befindlichen Restmengen zur Behandlung der Restfläche genau ausreichen. Bildlich gesprochen schiebt die Trägerflüssigkeit die Spritzbrühen bzw. Vormischung sowohl in der Teilmischungsbypassleitung wie auch in den Teilbreiten vor sich her, bis die Leitung bis zur Spritzdüse 7 diesbezüglich leer sind. Voraussetzung dafür sind natürlich jeweils zumindest annähernd gleiche Schlauchvolumina in allen die Teilbreiten versorgenden Stränge.

Die Füllung funktioniert unter diesen Voraussetzungen nach dem gleichen Prinzip umgekehrt: die leeren bzw. mit Trägerflüssigkeit der letzten Anwendung gefüllten Leitungen in die Peripherie werden zunächst durch nachdrückende Spritzbrühe bzw. Vormischungen gefüllt, mit Kenntnis der Volumenströme der Schlauchvolumina genau so lange, dass als Ergebnis vor den Düsen die neue Spritzbrühe ansteht.

## Patentansprüche

1. Spritzeinrichtung zum Ausbringen von Flüssigkeiten, insbesondere für landwirtschaftliche Zwecke, mit einer einem Fahrzeug zugeordneten Spritzbalkenanordnung mit zumindest einer quer zur Fahrtrichtung verlaufenden Flüssigkeitsleitung (8,10), die in Abständen mit Spritzdüsen (7) versehen ist, wobei den Spritzdüsen über die zumindest eine Flüssigkeitsleitung (8,10) zumindest eine die auszubringende Flüssigkeit jeweils von zumindest einer die Trägerflüssigkeit fördernden und den Spritzdruck erzeugenden Pumpe (3) und zumindest einer zumindest ein Wirkstoffmittel fördernden und in die Trägerflüssigkeit in dosierender Weise einspeisenden Pumpe (15,16) in einstellbarer Menge zuführbar ist, wobei die Trägerflüssigkeit und das Wirkstoffmittel mit zumindest annähernd konstantem Druck den Spritzdüsen (7) und/oder der zu den Spritzdüsen (7) führenden Flüssigkeitsleitung (8,10) zugeführt werden, wobei jeder zu Teilbreiten zusammengefassten Gruppe von Spritzdüsen (7) und/oder jeder Spritzdüse (7) die Wirkstoffmittelmenge in jeweils voneinander unabhängigen Mengen zuführbar ist, dass zu jeder zu einer Teilbreitengruppe von Spritzdüsen (7) und/oder zu jeder Spritzdüse (7) führenden Teilbreitenleitung (10) eine mit einem einstellbaren Durchflussventil (24) ausgestattete Wirkstoffleitung (19', 19") führt, wobei die Ausgangsleitung (4) der Trägerflüssigkeitspumpe (3) zu der als Spritzdruckregler (5) ausgebildeten Dosierarmatur führt,
**dadurch gekennzeichnet,**
**dass** von der von der Trägerflüssigkeitspumpe (3) kommenden Ausgangsleitung (4) vor der Dosierarmatur (5) an einer Verzweigstelle (18) eine Bypassleitung (19) abzweigt, wobei in dem als Bypassleitung (19) ausgebildeten Nebenstrom das Wirkstoffmittel zu einer Vormischung aufbereitet und dann in einer Mischkammer (12) einer Teilbreitenleitung (10) mit der Trägerflüssigkeit zur endgültigen Spritzbrühe vermischt wird.

2. Spritzeinrichtung nach Anspruch 1, **dadurch gekennzeichnet, dass** auch bei Änderung der ausgebrachten Menge des Wirkstoffmittels der Spritzdruck zumindest annähernd konstant bleibt.

3. Spritzeinrichtung nach einem oder mehreren der vorstehenden Ansprüche, **dadurch gekennzeichnet, dass** bei Erhöhung der ausgebrachten Wirkstoffmittelmenge die Trägerflüssigkeitsmenge reduziert wird, und dass bei Verringerung der ausgebrachten Wirkstoffmittelmenge die Trägerflüssigkeitsmenge erhöht wird.

4. Spritzeinrichtung nach einem oder mehreren der vorstehenden Ansprüche, **dadurch gekennzeichnet, dass** der Wirkstoffleitung (19', 19") zumindest ein einstellbares Durchflussventil zugeordnet ist.

5. Spritzeinrichtung zum Ausbringen nach einem oder mehreren der vorstehenden Ansprüche, **dadurch gekennzeichnet, dass** der Trägerflüssigkeitsleitung (4) und der Wirkstoffleitung (19', 19") jeweils zumindest ein einstellbares Durchflussventil (5,24) zugeordnet sind ist.

6. Spritzeinrichtung nach einem oder mehreren der vorstehenden Ansprüche 1 bis 3, **dadurch gekennzeichnet, dass** das der Trägerflüssigkeitsleitung (4) zugeordnete Durchflussventil (5) bei Änderung der Wirkstoffmittelmenge gleichzeitig, jedoch entgegengesetzt zu dem Durchflussventil (24) der Wirkstoffmittelleitung (19',19") mit dem der Wirkstoffleitung (19', 19") zugeordneten Durchflussventil (24) verstellt wird.

## Claims

1. Spraying device for applying liquids, in particular for agricultural purposes, having a spray beam arrangement which is assigned to a vehicle and has at least one liquid line (8, 10) which runs transversely with respect to the driving direction and is provided with spray nozzles (7) at intervals, it being possible for the spray nozzles to be fed, via the at least one liquid line (8, 10), at least one liquid to be applied, in an adjustable quantity, in each case by at least one pump (3) which delivers the vehicle liquid and generates the spray pressure and at least one pump (15, 16) which delivers at least one active substance and feeds it into the vehicle liquid in a metered manner, the vehicle liquid and the active substance being fed at an at least approximately constant pressure to the spray nozzles (7) and/or the liquid line (8, 10) which leads to the spray nozzles (7), wherein the quantity of active substance can be fed to each group of spray nozzles (7) combined to form partial width sections and/or to each spray nozzle (7) in quantities which are in each case independent of one another, in that an active substance line (19', 19") which is equipped with an adjustable throughflow valve (24) leads to each partial width section line (10) which leads to a partial width section group of spray nozzles (7) and/or to each spray nozzle (7),
the outlet line (4) of the vehicle liquid pump (3) leading to the metering fitting which is configured as a spray pressure regulator (5), **characterized in that** a bypass line (19) branches off upstream of the metering fitting (5) at a branching point (18) from the outlet line (4) which comes from the vehicle liquid pump (3), the active substance being processed to form a premixture in the auxiliary flow which is configured as a bypass line (19), and then being mixed with the vehicle liquid to form the final spray mixture in a mixing chamber (12) of a partial width line (10).

2. Spraying device according to Claim 1, **characterized in that** the spraying pressure remains at least approximately constant even if the applied quantity of active substance changes.

3. Spraying device according to one or more of the preceding claims, **characterized in that** the quantity of vehicle liquid is reduced if the applied quantity of active substance is increased, and **in that** the quantity of vehicle liquid is increased if the applied quantity of active substance is reduced.

4. Spraying device according to one or more of the preceding claims, **characterized in that** the active substance line (19', 19") is assigned at least one adjustable throughflow valve.

5. Spraying device for applying according to one or more of the preceding claims, **characterized in that** the vehicle liquid line (4) and the active substance line (19', 19") are assigned in each case at least one adjustable throughflow valve (5, 24).

6. Spraying device according to one or more of the preceding Claims 1 to 3, **characterized in that**, if the quantity of active substance changes, the throughflow valve (5) which is assigned to the vehicle liquid line (4) is adjusted at the same time, but in the opposite direction to the throughflow valve (24) of the active substance line (19', 19") with the throughflow valve (24) which is assigned to the active substance line (19', 19").

## Revendications

1. Dispositif de pulvérisation pour l'épandage de liquides, en particulier dans l'agriculture, comprenant un agencement de poutre de pulvérisation associé à un véhicule avec au moins une conduite de liquide (8, 10) s'étendant transversalement à la direction de conduite, laquelle est munie de buses de pulvérisation (7) réparties à intervalles, les buses de pulvérisation pouvant être alimentées en quantité ajustable par le biais de l'au moins une conduite de liquide (8, 10) en au moins un liquide à épandre à chaque fois par au moins une pompe (3) refoulant le liquide porteur et produisant la pression de pulvérisation et par au moins une pompe (15, 16) refoulant au moins une substance active et l'injectant de manière dosée dans le liquide porteur, le liquide porteur et la substance active étant acheminés à une pression au moins approximativement constante aux buses de pulvérisation (7) et/ou à la conduite de liquide (8, 10) conduisant aux buses de pulvérisation (7), chaque groupe de buses de pulvérisation (7) réuni en largeurs partielles et/ou chaque buse de pulvérisation (7) pouvant être alimentés en la quantité de substance active dans des quantités respectives indépendantes les unes des autres, en ce que une conduite de substance active (19', 19") munie d'une soupape d'écoulement ajustable (24) conduit à chaque conduite de largeurs partielles (10) conduisant à un groupe de largeurs partielles de buses de pulvérisation (7) et/ou à chaque buse de pulvérisation (7),
la conduite de sortie (4) de la pompe (3) à liquide porteur conduisant à la robinetterie de dosage réalisée sous forme de régulateur de pression de pulvérisation (5),
**caractérisé en ce**
**qu'**une conduite de dérivation (19) part de la conduite de sortie (4) provenant de la pompe (3) à liquide porteur avant la robinetterie de dosage (5) au niveau d'un point de ramification (18), la substance active étant préparée dans le flux secondaire réalisé sous forme de conduite de dérivation (19) pour former un prémélange puis étant mélangée dans une chambre de mélange (12) d'une conduite de largeur partielle (10) avec le liquide porteur pour former la bouillie de pulvérisation finale.

2. Dispositif de pulvérisation selon la revendication 1, **caractérisé en ce que** même lors d'une variation de la quantité de substance active épandue, la pression de pulvérisation reste au moins approximativement constante.

3. Dispositif de pulvérisation selon l'une quelconque ou plusieurs des revendications précédentes, **caractérisé en ce que** lors de l'augmentation de la quantité de substance active épandue, la quantité de liquide porteur est réduite et **en ce que** lors de la réduction de la quantité de substance active épandue, la quantité de liquide porteur est augmentée.

4. Dispositif de pulvérisation selon l'une quelconque ou plusieurs des revendications précédentes, **caractérisé en ce que** la conduite de substance active (19', 19") est associée à au moins une soupape d'écoulement ajustable.

5. Dispositif de pulvérisation pour l'épandage selon l'une quelconque ou plusieurs des revendications précédentes, **caractérisé en ce que** la conduite de liquide porteur (4) et la conduite de substance active (19', 19") sont à chaque fois associées à au moins une soupape d'écoulement ajustable (5, 24).

6. Dispositif de pulvérisation selon l'une quelconque ou plusieurs des revendications précédentes 1 à 3, **caractérisé en ce que** la soupape d'écoulement associée à la conduite de liquide porteur (4), lors de la variation de la quantité de substance active, est réglée simultanément, mais à l'inverse de la soupape d'écoulement (24) de la conduite de substance active (19', 19") avec la soupape d'écoulement (24) associée à la conduite de substance active (19', 19").
